# EUROPEAN PATENT SPECIFICATION

(11) **EP 1 416 685 B1**
(45) Date of publication and mention of the grant of the patent: **26.10.2005**
(21) Application number: 03019062.3
(22) Date of filing: 22.08.2003
(51) Int. Cl.: H04L 12/56, H04L 12/18, H04L 29/08

(54) **Enriched tree for a content distribution network**
Angereicherter Baum für ein inhaltverteilendes Netz
Arbre enrichi pour un réseau de distribution de contenu

(30) Priority: 31.10.2002 US 285271
(43) Date of publication of application: 06.05.2004
(73) Proprietor: NOVELL, INC., Provo, Utah 84606 (US)
(72) Inventor: Carter, Stephen R., Spanish Fork, Utah 84660 (US); Luciani, Juan Carlos, Highland, Utah 84003 (US); Holm, Vernon Roger, Sandy, Utah 84070 (US); Mahdavi, Jamshid, San Jose, California 95126 (US); Wu, Felix Sun-Tsyr, San Jose, California 95129 (US)
(74) Representative: Curley, Donnacha John

(56) References cited:
- US-A- 6 047 331
- WITTMANN ET AL: "Multicast Communication, Protocols and Applications" May 2000 (2000-05) , MORGAN KAUFMANN PUBLISHERS , SAN FRANCISCO (USA) XP002173748 * paragraph [3.4.2] *

## Description

### Copyright Notice/Permission

A portion of the disclosure of this patent document contains material that is subject to copyright protection. The copyright owner has no objection to the facsimile reproduction by anyone of the patent document or the patent disclosure as it appears in the Patent and Trademark Office patent file or records, but otherwise reserves all copyright rights whatsoever. The following notice applies to the software and data as described below and in any drawings hereto: Copyright © 2002, Volera, Inc., All Rights Reserved.

### Field of the Invention

The present invention relates to content distribution networks, and in particular enriching a tree for a content distribution network.

### Background of the Invention

Network bandwidth is becoming increasingly challenging as resources, previously deployed, become inadequate for handling increased network traffic. Many issues have contributed to this unforeseen expansion in the use of network bandwidth. One of the issues is the ever-increasing use of digital media used for training and electronic learning. Accordingly, organizations have discovered that remote network meetings and/or training using multi-media content for a specific task is far less expensive to the organization than flying meeting coordinators and/or educational trainers to remote geographic locations.

Moreover, in the area of entertainment, many have found the convenience of selecting and viewing media from a desired location much more enticing than in engaging in a journey to a store, searching media inventory, checking a desired selection out, and returning to watch the media in the desired location. Further, the problem is rapidly escalating because of the increased use of networks to move sizable media files to remote viewing locations in time for desired events. Legacy network infrastructure is becoming taxed beyond its intended capacity, and the expense associated with deploying additional or new network resources is often prohibitive for organizations.

Conventionally, a network is abstracted into higher levels of abstraction in order to simplify the complexities of the underlying physical network. The abstraction is commonly viewed as an overlay on the physical network. Moreover, the abstraction is often referred to as a topology or logical map of the network. The map includes nodes representing physical (e.g., servers) or logical (e.g., applications) resources of the network. The map also includes links representing physical (e.g., media channels) or logical (e.g., protocols) communications between the nodes. A path from an entry or ingress node to one or more exit or egress nodes can be defined within the map by connecting nodes and links in an ordered manner. The nodes and links can also include costs that are determined by policies for the network. Thus, a path from an ingress node to an egress node can have an associated cost. The policies can include a variety of metrics or attributes for each of the links and/or nodes, such as bandwidth available, geographic distance, media transmission channel, and the like.

Once the nodes, links, and policies are known, spanning tree algorithms can be used to generate hierarchical trees within the topology. Moreover, a variety of best-path algorithms exist to produce least-cost paths that may be used for transferring data from an ingress node to egress nodes within a tree of the topology. However, existing techniques rely on software and hardware associated with the physical network to reroute the data through the network should any particular node or link fail when the data is in transit within the network. These techniques are not optimal since the underlying software and hardware of the physical network must dynamically recalculate a new transit path for the data when failures are detected. Furthermore, when recalculations are needed the underlying software and/or hardware of the physical network may be taxed or performing other vital operations. As a result, the data may not be optimally, efficiently, and/or timely moved through the network when dynamic rerouting is needed. Additionally, the original structure of any used tree can be lost or not efficiently maintained when dynamic rerouting is performed.

Also, because conventional approaches use dynamic rerouting when failures are detected during a data transfer, little empirical knowledge that a network administrator may have with respect to his/her network is used during the rerouting. For example, an organization of a third-world country may frequently experience link or communication outages over a specific link, while another organization experiences frequent heavy traffic on a specific node during certain hours of a day. Thus, because this empirical knowledge may not be fully utilized when dynamic rerouting occurs, reroute paths can be consistently and unnecessarily problematic for a network administrator.

As is now apparent to one of ordinary skill in the art, there exists a need for improved techniques that produce enriched trees for content distribution networks. This need is particularly desirable with large-scale networks, networks with heavy traffic, and/or networks processing large media files. Furthermore, the techniques should not require a dynamic reroute calculation when nodes and/or links of the network fail during a data transfer. Additionally, the techniques should be flexible enough to capture the empirical knowledge of network administrators with respect to their own individual networks and experiences related thereto.

US6047331 discloses a method for generating first and second tree topologies for any source node in a network which can be represented as a node or an edge redundant graph, such that any node in the graph remains connected to the source node via at least one tree even after the failure of a node or an edge.

### Summary of the Invention

In various embodiments of the present invention, techniques for enriching a distribution tree of a content distribution network are described. The enriched tree represents a map that includes planned paths to move data through the content distribution network and one or more alternative paths to reroute the data should a failure occur with one or more links and/or nodes of the content distribution network. The enriched tree or augmented tree can be viewed as a directed graph (can be cyclic) having the one or more alternative paths accessible within the enriched tree. The tree for the content distribution network is received and a request to generate the alternative paths for the tree is also received. Moreover, the alternative paths are generated based on the request. Further, the alternative paths are generated before using the tree to transfer data through the content distribution network.

In another embodiment of the present invention, another method to enrich a tree for a content distribution network is described. The tree is requested for the content distribution network and presented. A desired level of alternative paths to generate for the tree is received. Next, alternative paths are generated using the desired level and the tree. Furthermore, the paths are associated with the tree before data is transferred over the content distribution network using the tree.

In still another embodiment of the present invention, a system to enrich a tree for a content distribution network is presented. The system includes a tree, a skip parent module, and a join module. A spanning tree algorithm is used to generate the tree. Moreover, the tree includes a plurality of links between nodes, and one or more planned paths for moving data through the content distribution network. The skip parent module is used to generate a number of the alternative paths if a parent node fails within the content distribution network. The join module is used to generate a number of the alternative paths if a link fails within the content distribution network. Further, the alternative paths are associated with the tree before the data is moved through the content distribution network.

In yet another embodiment of the present invention, an augmented tree data structure residing on a computer readable medium for providing alternative paths when moving data through a content distribution network is described. The augmented tree data structure includes a tree with access to one or more alternative paths within the tree. The tree is depicted within a topology of the content distribution network and includes an ingress node, intermediate nodes, one or more egress nodes, links between the nodes, and one or more planned paths from the ingress node to the egress nodes for moving data through the content distribution network. The one or more alternative paths augment the planned paths for moving the data around potential failures in the nodes and/or the links when the data is moved through the content distribution network.

Still other aspects of the present invention will become apparent to those skilled in the art from the following description of various embodiments. As will be realized the invention is capable of other embodiments, all without departing from the present invention. Accordingly, the drawings and descriptions are illustrative in nature and not intended to be restrictive.

### Brief Description of the Drawings

- FIG. 1A: is a diagram of an example topology of a Content Distribution Network, according to one embodiment of the present invention;
- FIG. 1B: is a diagram of an example topology depicting enrichment of FIG. 1A, according to one embodiment of the present invention;
- FIG. 2: is a flowchart representing a method to enrich a tree, according to one embodiment of the present invention;
- FIG. 3: is a flowchart representing another method to enrich a tree, according to one embodiment of the present invention;
- FIG. 4: is a diagram of a system to enrich a tree, according to one embodiment of the present invention; and
- FIG. 5: is a diagram of a data structure representing an augmented tree, according to one embodiment of the present invention.

### Detailed Description of the Invention

In the following description, reference is made to the accompanying drawings that form a part hereof, and in which is shown by way of illustration specific embodiments in which the invention may be practiced. These embodiments are described in sufficient detail to enable one of ordinary skill in the art to practice the invention, and it is to be understood that other embodiments may be utilized and that structural, logical, optical, and electrical changes may be made without departing from the scope of the present invention. The following description is, therefore, not to be taken in a limited sense, and the scope of the present invention is defined by the appended claims.

In various embodiments of the present invention, a Content Distribution Network (CDN) is abstracted into a topology that represents and simplifies the particulars associated with the actual physical network. Many routers, switches, hubs, and the like are used to effect the physical network that the topology abstracts. CDN administrators view the topology to create a job that describes the content/data to be moved through the CDN. Moreover, the CDN uses the topology to schedule when the job will process and where the content/data is to be delivered within the CDN. The topology characterizes the CDN and can be coupled with visualization applications to visually present the CDN to administrators.

Accordingly, administrators use the topology to visualize the network as one or more hierarchical trees, where each tree has an ingress node, zero or more intermediate nodes, and one or more egress/destination nodes. The nodes represent physical devices of the CDN (e.g., servers, computing devices, appliances, and others) and logical devices of the CDN (e.g., applications, server farms, and others). The nodes of the tree are connected via links. The links represent physical connections between the nodes (e.g., media channels, transmission line types, and others) and logical connections between the nodes (e.g., communication protocols used, security applications used, and others).

The topology permits attributes or characteristics of various trees to be readily discerned. For example, an ingress node (e.g., a single tree's root node) can be depicted as an octagon, an egress node can be depicted as a circle with two triangles to the bottom right of the circle, and the like. Additionally, the displayed length of a link can be used to determine the distance of a communication connection between two nodes, or optionally the quality or speed of the communication length. Thus, a link of longer length is associated with a less desirable communication connection than a link having a shorter length. Also, links can be presented as dashed lines with directional arrows in order to indicate a planned path of the content/data through any particular tree from the ingress node to one or more egress nodes. CDN topologies are well known to one of ordinary skill in the art, and readily made available to CDN administrators. All such topologies and topology visualizing tools are intended to fall within the scope of the present disclosure. Moreover, a variety of visual cues (e.g., colors, textures, fonts, and the like) can be used beyond what has been presented to identify various attributes and characteristics of nodes, links, and paths within the tree or topology of the CDN. Thus, the visual cues discussed above are presented for illustrative purposes only to assist in describing some embodiments of the present invention, and should not be viewed as a limitation on the present invention.

An ingress node is a point in the topology where content/data is injected into the CDN. A single tree depicted within the CDN topology includes a single ingress node. It is not desirable to move the content, once received at an ingress node, to all nodes of the CDN, since this is an inefficient use resulting in redundant content/data transfers within the CDN. An egress node is an exit point for the content/data (e.g., device or appliance where the content/data is consumed).

Furthermore, the initial trees that are depicted within the CDN topology of the present invention can be generated using any conventional algorithm, such as the Steiner spanning tree algorithm. Ad hoc or customized tree generating algorithms can also be used, such as when particular characteristics of the CDN make such an option practical to do. Also, paths within the tree or topology can be generated using any conventional, ad hoc, or customized path generation algorithm. As one of ordinary skill in the art readily appreciates, path generation algorithms take input parameters (e.g., a pointer to the root of a tree, cost characteristics, policies, attributes of nodes and links, egress nodes, and the like) in order to produce one or more planned paths within a tree for the content/data to travel most efficiently.

Furthermore, in one embodiment, the present disclosure is implemented within the Volera Content Distribution Network (VCDN) product offerings, distributed by Volera, Inc. An enriched CDN tree is used to produce a routing table that is further used by VCDN to efficiently move content/data through a CDN without significant disruption even when some nodes and links fail within the CDN while the data is being moved through the CDN. However, it is to be understood that the teachings of the present disclosure can be implemented in other existing products (e.g., existing routers, switches, hubs, and the like) and/or standalone products. All such modifications to existing products and/or custom created products, which use the teachings of the present disclosure, are intended to fall within the scope of the present disclosure.

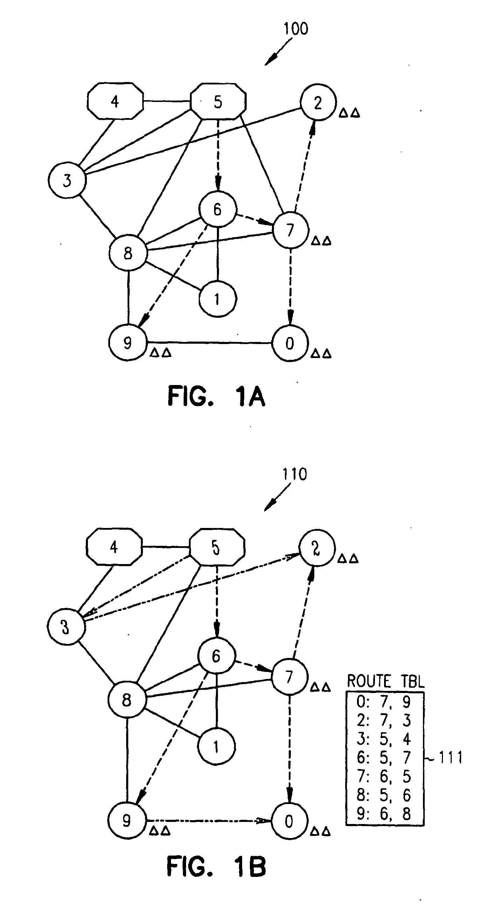

FIG. 1A illustrates a diagram of one example topology 100 of a CDN, according to one embodiment of the present invention. The example topology 100 is embodied in a computer readable medium and represents CDN nodes 0-9. For purposes of illustration only, ingress nodes 4 and 5 are depicted as octagons, while the egress nodes 9, 0, 7, and 2 are depicted as circles with two triangles to the lower right of the circles. The topology also includes circles with no triangles indicating intermediate nodes 3, 8, 6, and 1, which are neither ingress nodes nor egress nodes within the CDN. Moreover, the length of the lines connecting the nodes can be viewed as costs associated with using a particular communication between two nodes. Thus, a shorter length link is more desirable than a longer length link.

Each ingress node 4 and 5 can be viewed as a root of a tree having nodes within the topology 100. As one of ordinary skill in the art readily recognizes, trees can be derived and generated using any spanning tree algorithm, such as the Steiner spanning tree algorithm and others. For purposes of illustration only, the present example discussed in FIGS. 1A and 1B focuses on a single tree T having a root node depicted as ingress node 5 within the topology 100. The tree includes nodes 5, 6, 9, 7, 2, and 0.

In addition to generating initial tree T, any conventional, custom, or ad hoc path generation algorithm can be used to generate paths from the root node/ingress node 5 of tree T to the corresponding egress nodes 9, 0, 7, and 2. For example, the path to egress node 9 is defined by traversing tree T in the following order 5->6->9. Likewise, the path to egress node 0 is defined by 5->6->7->0. The path to egress node 7 is 5->6->7, and the path to egress node 2 is 5->6->7->2. Path generation algorithms determine based on costs (e.g., characteristics of nodes and/or links, and/or policies of the CDN), which paths are most optimal for the CDN as a whole. Thus, in the present example, it is less expensive to move content/data injected into the CDN at ingress node 5 to node 6 before proceeding to any of the egress nodes 9, 0, 7, or 2.

Once the tree T and the initial planned paths are derived from the topology 100 for the CDN, the tree is enriched to include one or more alternate paths within the tree T for the content/data to move in the potential event of node/link failures. FIG. 1B depicts one such enrichment. Although, FIG 1B depicts egress node 7 as being isolated within the topology 110, it is to be understood that this is not the case. This was done for purposes of illustration to isolate an example of enrichment that is capable with the present invention. In fact, all paths original depicted in FIG 1A also exist in FIG. 1B, however, FIG 1B includes alternate or enriched paths that augment the existing paths of tree T in FIG. 1A.

FIG. 1B illustrates a diagram of one example topology 110 depicting enrichment of tree T in FIG. 1A, according to one embodiment of the present invention. Enrichment of trees in the present invention can occur based on configurable options supplied by a CDN administrator. The tree T can be enriched based on a particular node not being able to communicate with one of its corresponding parent nodes (Skip Parent enrichment type). Alternatively, tree T can be enriched based on a particular node not being able to communicate with one of its links (Join enrichment type). Moreover, an "optional enrichment" feature can be used with either of the two types of enrichment. Optional enrichment, organizes the alternative paths that are generated by enrichment from a least cost (e.g., shortest path) to a highest cost (e.g., longest path). Original planned paths for tree T and any alternative enriched paths for tree T are made available as routing tables for moving content/data through the CDN. Also, each enrichment type can be used in isolation or in combination with the remaining enrichment type, with or without the optional enrichment feature.

For purposes of illustration, a node being worked on for purposes of enrichment is referred to herein as a "subject node." Additionally, the notation N(#,EP) will be used for purposes of illustration, where N is a node identifying integer number, # indicates the current number of unused links associated with node N, and EP is used to indicate whether node N is an egress node (e.g., egress point (EP)).

As previously conveyed, conventional techniques dynamically reroute content/data through the CDN when node or link failures are detected. This taxes the network resources, results in delays, and does not leverage the use of the initial created spanning tree within the topology of the CDN. With the present invention as depicted in various embodiments presented herein, enriched or alternative paths for the initially created spanning tree T are available with the tree T and predetermined, such that when an actual failure occurs no recalculation is required of the network resources. Thus, content/data arrives more timely at the egress nodes 9, 0, 7, and 2. Furthermore, movement of the content/data utilizes the CDN more efficiently, and the movement can lessen the impact on identified mission critical applications processing within the CDN. Additionally, minimum CDN resources can be used to detect CDN loops and rerouting of content/data when outages or failures are detected require no additional CDN resources for resolution.

Initially, when a CDN administrator desires enrichment, the administrator identifies a number of subject nodes for which alternative paths within the tree T are to be generated. Alternatively or in combination with identifying the subject nodes, the administrator can identify a number of links within the tree T for which alternative paths with the tree T are to be generated. In this way, the administrator can customize the level of granularity associated with generating alternative paths, and the administrator can use his/her own empirical knowledge about his/her network to determine whether and when skip parent enrichment and/or join enrichment should be used combined with/without the optional enrichment feature.

In one embodiment, in preparing the tree T for enrichment an optional operation can be implemented to provide more efficient processing of the Skip Parent and Join enrichment operations. The optional operation is called Subject Node Ordering. Subject Node Ordering creates a list of all nodes associated with tree T. This operation determines which nodes of the tree T are associated with an optional enrichment and adds these nodes to the list. Moreover, each node of the tree T includes an integer counter # that includes the total number of unused or non-filling links (e.g., links not currently planned to be used as delivering the content/data) that are associated with each node. Additionally, egress nodes are identified and flagged as EP nodes. Next, the entire list is sorted in ascending order by counter value # and EP indicator. Finally, all nodes with a counter value of 0 are removed, since these nodes cannot be enriched because only one filling link exists and is currently being used within the tree T.

When an administrator selects a Skip Parent enrichment type, a subject node within the tree T is identified by the administrator within the topology 110. In the illustrative example presented in FIG. 1B, it is assumed that the administrator has selected subject node 2 (an egress node) for the Skip Parent enrichment feature of the present invention. Nodes and links associated with the original planned paths for the content/data to move through the CDN can be identified with the notation: 2(1EP), 0(1EP), 9(2EP), 7(4EP), and 6(4) and is depicted in FIG. 1A.

When the Skip Parent enrichment operation is performed with subject node 2, all links associated with the parent node of subject node 2 used in the planned path for tree T are disregarded. With the present example, this makes the link from node 7 unavailable to node 2. Any technique can be used to disregard the parent node; one such technique is to flag the parent node as having an infinite cost, all remaining links of tree T that were initially deemed as non-filling links for the subject node are assigned a cost of 0. Next, the remaining nodes/links within the temporarily revised topology are submitted to the used path generation algorithm to produce a new alternative path for the subject node 2.

As depicted in FIG. 1B, this results in one enriched path 5->3->2 that is generated for subject node 2, when we assume node 2 will not have its parent node 7 available. The enriched tree T can then be denoted as 2(0EP), 0(1EP), 9(2EP), 7(4EP), and 6(4). Moreover, when node 0 uses the Skip Parent enrichment operation, which is also node 7 in the tree T, an enriched path is generated as 5->6->9->0, as is also depicted in FIG. 1B. Once enrichment is performed to the administrator configured desired level of granularity, the tree T and its original planned paths are restored to their original values as depicted in FIG. 1A and augmented or enriched with the alternative paths depicted in FIG. 1B.

Correspondingly, the revised, enriched, and augmented tree T includes a desired level of alternative paths that can be used when the content/data is moved through the CDN. Thus, when a parent node is unresponsive or fails during content/data transmission the reroute vector or path for the downed parent is readily acquired from the enriched tree T of the present invention, without delay or unnecessary use of network resources. In some embodiments, this enriched tree T can be provided as a routing table 111 for the content/data as it traverses through the CDN.

Thus, in the present example, node 2 would automatically acquire the content/data from node 3 should node 7 become unavailable, and likewise node 0 would automatically acquire the content/data from node 9 if node 7 is unavailable. The routing table 111 can be supplied to conventional or traditional routing devices, routing protocols, and/or routing applications for use when moving the content through the CDN. Alternatively, the routing table 111 can be used by cache accelerators or other customized applications to route the content/data through the CDN. The paths/routes included within the routing table 111 can, in one embodiment, be ordered by least cost or shortest path when the administrator selects the optional enrichment feature of the present invention, as is depicted in routing table 111 of FIG. 1B.

Additionally, the Skip Parent enrichment operation can be used for each node in the original tree (by default) or for those nodes in the original tree specified by the Administrator that require an alternative path.

The Join enrichment operation does not focus on when a parent of a subject node fails, but rather, focuses on quickly and efficiently rejoining the tree T when a link to the subject node is presumed to be unavailable. This is done by flagging filling links to the subject node at infinite cost or unavailable and all non-filling links to the subject node at set to cost, with all remaining links that are part of the tree T marked at zero cost. Then, the path generation algorithm is executed to find an enriched path to the subject node. The original settings for tree T are then restored and augmented with the enriched path generated by the Join enrichment operation. Applying the Join enrichment operation to the present example with subject node 2 results in the same enrichment that was produced with the Skip Parent and is depicted in FIG. 1B. However, as one of ordinary skill in the art readily appreciates, this is not always the case and enriched paths can vary depending upon the tree being enriched and can be determined using the teachings presented above.

As previously discussed, the Skip Parent and Join enrichment operations can be processed in any order, alone, or in combination by a CDN administrator. Further, each operation can include the optional enrichment feature as presented above. Additionally, any duplicate enriched paths that are generated can be pruned from the enhanced tree T for efficiency purposes.

During operation, when a node and/or link fails an event is raised within the CDN that indicates the node/link is unresponsive or does not respond within a predetermined period of time, since it could be the unresponsive node is not down, but rather just timed-out because of a heavy processing loaded at any particular point in time. When this occurs, the routing table 11 representing the enriched tree T is immediately accessed for the next alternative path node. Thus, the network resources only perform a table lookup and do not have to perform any reroute calculations. This is particular desirable when the content/data being moved through the CDN are large media files. Although, the tenets of the present disclosure can be used with any network or data transfer and all such applications are intended to fall within the scope of the present disclosure.

The depicted routing table 11 includes other enrichment for nodes and links that is not discussed above. However, it is apparent to one of ordinary skill in the art that these additional enriched nodes and link can be produced in the same manner as is presented with the illustrative example.

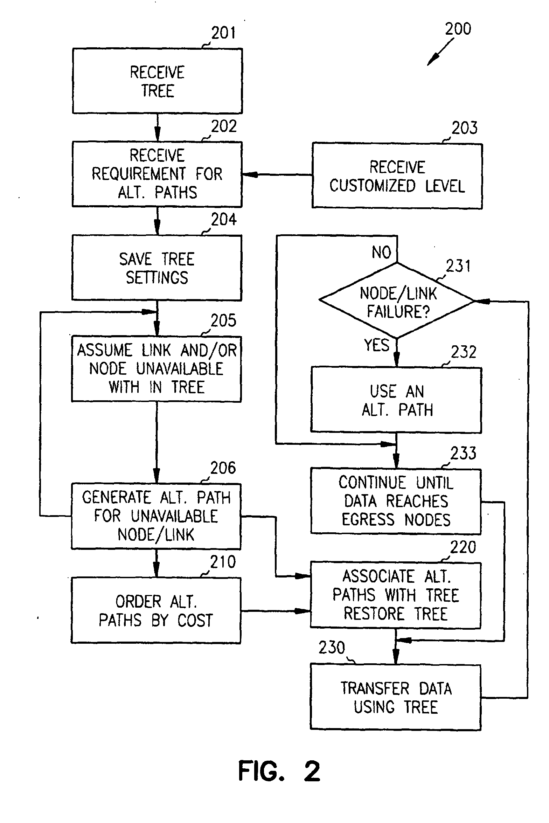

FIG. 2 illustrates a flowchart representing one method 200 to enrich a tree, according to one embodiment of the present invention. The tree is derived or generated from a CDN topology. Tree generation or derivation can occur using any conventional, customized, and/or ad hoc tree generation algorithm. Paths can also be generated within the tree for projecting one or more planned paths for content/data to move through the CDN. Path generation algorithms are well known to one of ordinary skill in the art, and all such existing, custom developed, or ad hock path generation algorithms can be used with the present disclosure. The paths originate at the root of the tree or an ingress node and traverse defined links through zero or more intermediate nodes to one or more egress nodes.

A CDN administrator can view the topology (e.g., nodes and links), the tree, and the planned paths using any Graphical User Interface (GUI) application. The visualization also permits the administrator to discern costs associated with the nodes, links, and path. Costs are determined by characteristics of the nodes and/or links, or policies established for the CDN. The path generation algorithm can use costs when generating the paths for the tree.

At 201 a tree contained within the CDN topology is received. In some embodiments, receipt is acquired by obtaining a pointer to the root node of the tree, such that the entire tree can be determined and traversed by using the root pointer. The tree is received by tree enrichment operations practicing the teachings of the present disclosure. In some embodiments, these operations are implemented as a Skip Parent module and a Join module, with each module having an optional enrichment feature that orders the enriched paths generated by least cost to highest cost. Of course as is readily apparent to one of ordinary skill in the art, a single module or more than two modules can be implemented to practice the teachings presented herein, and all such configurations fall within the scope of the present disclosure.

At 202 a request is received by the operations implementing method 200. The request is for enriching the current tree with one or more alternative paths based on assumptions that are provided as parameters to the request. The parameters identify subject nodes of the tree to enrich, along with indications as to whether a parent is to be presumed unavailable and/or whether filling links included within the original planned paths are presumed to be unavailable to the subject nodes. Optionally, at 203, a customized level of enrichment (e.g., parameters) can be received from an administrator. The customized level can provide a list of nodes/links to enrich along with the type of enrichment to perform. Alternatively, the customized level can represent a hierarchical level within the tree where enrichment is desired. Additionally, the customized level can provide an indication that the tree is to be enriched with all determinable alternative paths that can be generated by the current tree.

At 204, before the tree is enriched with alternative paths the initial tree settings and paths are saved for subsequent restoration when the tree has been enriched to the desired level. Next, at 205, the appropriate enrichment modules are executed. The enrichment modules identify a subject node within the tree and they assume the subject node's parent is unavailable and/or the filling links of the subject node are unavailable. The path generation algorithm is then executed with the unavailable parent and/or node to produce an enriched and alternative path for the subject node. Accordingly, at 206, an alternative path(s) is generated for each subject node being worked on by the enrichment modules. The enrichment modules continue to process until all subject nodes identified as requiring enrichment are processed. Optionally, at 210, the enriched path(s) is (are) ordered from least cost (e.g., shortest path) to highest cost (e.g., longest path). This can be achieved by using the optional enrichment feature of the present invention.

At 220, the alternative paths are associated with the tree and the original planned paths of the tree and the original tree settings are restored. At some later point in time, content/data is injected into the CDN at the ingress node or root of the tree as depicted at 230. If the ingress or root is unavailable, then the content/data move fails, since the content/data cannot enter the CDN. However, if the ingress node is available, then the content/data is initially moved through the CDN using the originally generated planned paths for the tree in order to reach one or more egress nodes where the content/data is consumed.

As the content/data moves through the CDN, checks are made to determine if the next available node/link has failed or is otherwise unresponsive, as depicted at 231. If a failure is detected for the next node/link of a planned or current path for the content/data, then, at 232, the appropriate enriched or alternative path is selected and the content/data is moved appropriate to the new node/link. This process continues at 233 until the content/data has reached the desired egress nodes. In some embodiments, the planned paths of the tree and the alternative or enriched paths are represented within a routing table, that is accessible to the routing applications of customized applications, which are responsible for moving the content/data through the CDN. Thus, rerouting is predetermined and available when a failure occurs and unlike conventional approaches there is no need for performing dynamic rerouting calculations that can result in delays and tax CDN resources unduly. Moreover, the initial structure of the optimally generated tree for the CDN is substantially maintained during the content/data rerouting.

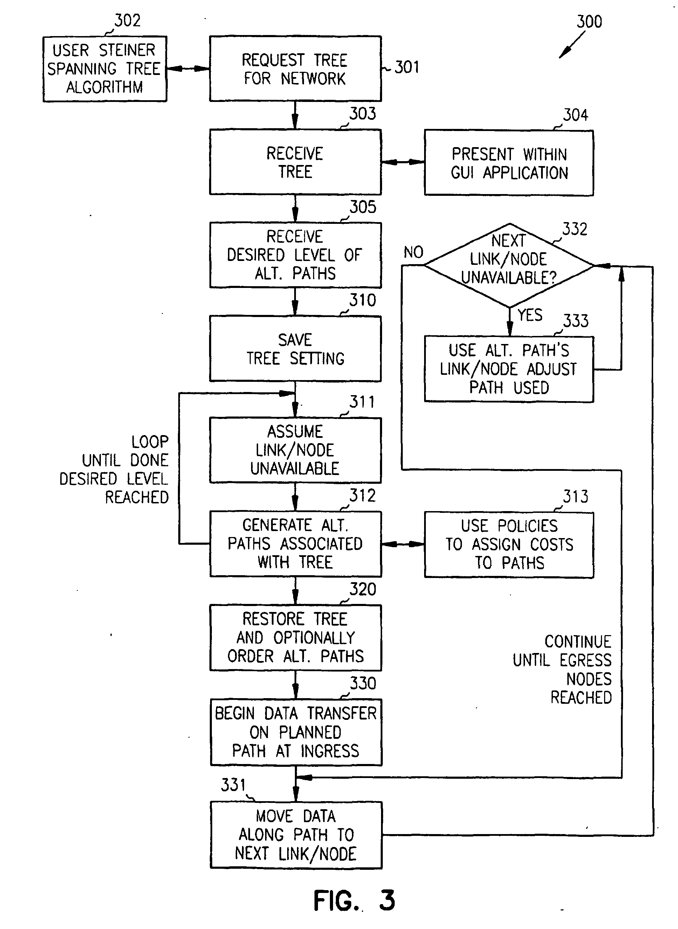

FIG. 3 illustrates a flowchart representing another method 300 to enrich a tree, according to one embodiment of the present invention. Initially, at 301, a request is made to generate a tree abstraction from a given topology for a CDN. In one embodiment, at 302, the tree generation is requested from the Steiner spanning tree algorithm, of course any tree generation algorithm can be used with the teachings of the present disclosure. The ingress node of the tree is the tree's root. Moreover, any path generation algorithm can be used to produce one or more paths from the ingress node to one or more egress nodes (e.g., destination or consumption locations of content/data within the CDN).

At 303, the generated tree is received. In one embodiment, the tree is presented within a GUI application to a CDN administrator, as depicted at 304, within the context of the entire topology, as depicted at 304. The topology can include one or more additional trees represented within the CDN. The presentation also permits the administrator to visualize characteristics and costs associated with nodes, links, and/or paths of the tree. Thus, discernable visual cues permit the administrator to readily determine aspects of the tree. The administrator uses the visualization and tree to create a job to move content/data from the root (e.g., ingress node) of the tree to one or more egress nodes.

The administrator provides a desired level of alternative paths desired for the job at 305. The desired level can identify subject nodes with potential unavailable parents and/or links. Alternatively, the desired level can indicate an administrator's desire to fully and completely produce alternative or enhanced paths for the job. Once the desired level of granularity for alternative path generation is received, then, at 310, the initial tree and its settings/planned paths are saved off for later restoration.

Next, one or more tree enhancing operations are executed where nodes being processed for enhancements are identified as subject nodes. Accordingly, at 311, the operations assume that parent nodes/links for the subject nodes are not available and execute the path generation algorithm under these circumstances. This results, in alternative paths for the subject nodes being generated at 312. This assumes that the subject node has other links and/or parents beyond what was excluded; otherwise, under such circumstances enrichment is not performed. The alternative paths being generated, in some embodiments, can use CDN policies or customized policies when determining costs associated with the alternative paths. In some cases these policies, are the same as was used when the initial planned paths for the tree were generated, although nothing prohibits the policies from being augmented with the present disclosure to include new policies desired by an administrator.

At 320, the processing loop of the enrichment operations is terminated once all subject nodes desired are processed. Whereupon, the tree is restored to its original settings and associated with all the alternative paths generated. Next, at 330, when the administrator's job is processed, the content/data of the job is injected into the CDN at the root or ingress node and the paths to move the content/data are along the original planned paths for the tree. Accordingly, at 331, the next link/node on initialization will be the root node.

Following the planned paths for the job, a next link/node is identified within the planned paths and a check is made at 332 to determine if such link/node is responsive or available. If the next link/node is not responsive or not available, then at 333 one of the corresponding alternative paths, having alternative next nodes/links is immediately selected and checked for availability at 332. The process continues back at 331 until the job is processed, which indicates the content/data has been successfully moved through the CDN to the egress nodes for consumption.

In one embodiment, the planned paths and enriched alternative paths are represented in a routing table data structure, which is accessible to a routing application, such as a caching application responsible to move the content/data or traditional routing techniques that use the routing table data structure of the present disclosure.

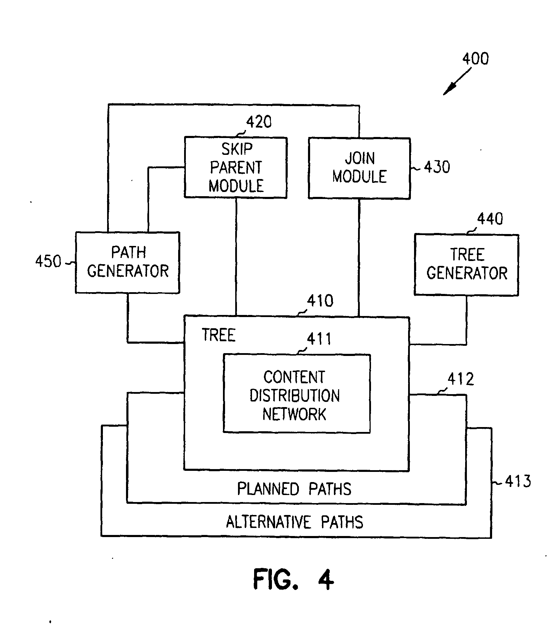

FIG. 4 illustrates is a diagram of one system 400 to enrich a tree, according to one embodiment of the present invention. The system 400 includes a tree 410, a skip parent module 420, and a join module 430. The system is embodied in a computer readable medium and used to enhance a conventional tree with alternative paths, where the tree 410 of the present disclosure is used to provide routing information for content/data moving through a CDN 411 from an ingress node to one or more egress nodes.

The tree 410 is derived from a topology of the CDN 411. In some embodiments, the tree is derived or generated using any existing or custom developed spanning tree generation/derivation algorithm 440. Moreover, the tree 410 includes a number of planned paths 412 that are initially provided with the tree 410 through use of any existing or custom developed path generation algorithm 450. Paths identify a route for content/data to travel through the CDN 411 starting from an ingress node and traveling through one or more intermediate nodes to one or more final destination or egress nodes. The tree 410 includes an ingress node, zero or more intermediate nodes, egress nodes, planned path 412 indications, and links between the nodes.

Generating one or more alternative paths 413 for the tree 410 enriches the tree 410. The skip parent module 420 and the join module 430 generate the alternative paths 413 for the tree 410. Moreover, the alternative paths 413 are provided and augment the tree 410 before any content/data is injected into the CDN 411 and directed to progress along a planned path 412 towards one or more egress nodes.

The skip parent module 420 receives configurable parameters indicating which nodes of the tree 410 to enrich with alternative paths 413. The skip parent module 420 works on the nodes identified as subject nodes and makes parent nodes associated with the subject nodes unavailable for path generation 450. Next, the skip parent module 420 calls the path generator 450 with a revised version of the tree 410 and request a new alternative path 413 for the subject nodes being enriched. Finally, once the skip parent module 420 has completed its enrichment, the original settings and planned paths 412 for the tree 410 are restored and the newly enriched alternative paths 413 are associated with the tree 410.

In a similar fashion, the join module 430 receives configurable parameters identifying subject nodes of the tree 410 to enrich. The join module 430 works on the identified subject nodes and makes existing filling links to the subject nodes unavailable for path generation 450. Next, the join module 430 calls the path generator 450 to generate a newly enriched alternative path 413 for a subject node where previous existing filling links are not used. Finally, once the join module 430 has completed its enrichment, the original settings and planned paths 412 for the tree 410 are restored and the newly enriched alternative paths 413 are associated with the tree 410.

The skip parent module 420 and the join module 430 can be used in combination with one another or in isolation with one another, depending upon the needs and/or desires of a CDN administrator. Moreover, each module 420 and 430 can include an optional enrichment feature, which orders the alternative paths 413 from the least cost (e.g., shortest path) to highest cost (e.g., longest path). Furthermore, the path generator 450 can provide paths based on costs associated with various characteristics of the CDN 411, nodes, and/or links.

In one embodiment, the enriched tree 410 is provided for use in a network routing table and used by one or more accelerated caching applications to move the content/data through the CDN 411. In another embodiment, the enriched tree 410 is provided for use in a network routing table and used by one or more conventional routing devices or routing applications to move the content/data through the CDN 411.

In this way, the system 400 can be used by one or more additional applications to efficiently move the content/data through the CDN 411. This is done such that when the content/data is injected into the CDN 411 at the ingress or root node of the enriched tree 410, alternative nodes/links associated with the alternative paths 413 are predetermined and available for use should any node/link fail during the content/data move. As one of ordinary skill in the art readily appreciates, the techniques of the present disclosure require no substantial use of network resources to affect a reroute of the content/data when failures occur, since the present disclosure has already accounted for such circumstances with the enriched tree 410 having the alternative paths 413. Moreover, the alternative paths 413 can be custom generated based on a CDN administrator's empirical knowledge of the CDN 411. Thus, content/data is more efficiently moved through the CDN 41 1 with the tenets of the present disclosure.

In some embodiments, the path generator 450 can be included within or part of the tree generator 440. Additionally, in some embodiments, the path generator 450 used to generate the planned paths can be separate and distinct from a path generator 450 used to generate the alternative paths.

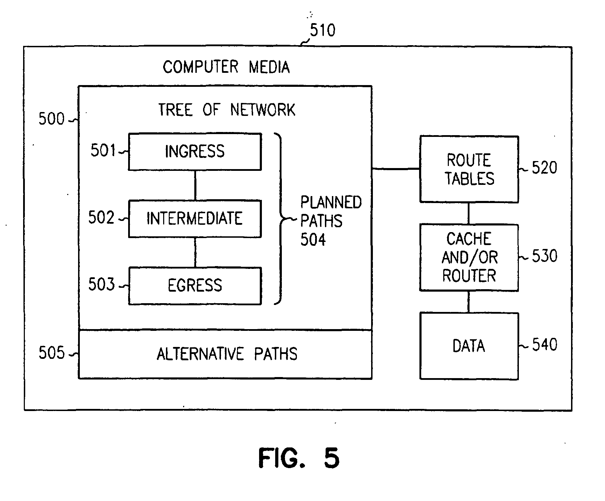

FIG. 5 illustrates a diagram of a data structure representing an augmented tree 500, according to one embodiment of the present invention. The augmented tree data structure 500 includes an original tree data structure having an ingress node 501, zero or more intermediate nodes 502, one or more egress nodes 503, and one or more original planned paths 504. The augmented tree data structure 500 also includes one or more enriched or alternative paths 505. The augmented tree data structure 500 resides in a computer readable medium 510 and is accessible to one or more applications used to enrich the data structure 500, or to use the data structure 500 for routing content/data 540 through a CDN.

The original tree data structure is generated using any conventional or custom developed spanning tree algorithms. The original tree data structure is depicted within a topology that is abstracted from the CDN. The topology can include one or more tree data structures. Further, the original tree data structure includes links between the nodes. The planned paths 504 provide a planned route for moving content/data 540 from the ingress node 501 through zero or more intermediate nodes 502 to one or more egress nodes 503 using the links.

The alternative paths 505 are alternatives to the planned paths 504 and are available with the augmented tree data structure 500 (e.g., now a cyclic graph) before the content/data 540 is moved or injected into the CDN. The alternative paths 505 are automatically acquired from routing tables 520 when a node/link is determined to be unavailable or unresponsive with a planned path 504, or with one of the alternative paths 505. The routing tables 520 are accessible to applications and/or devices 530 (e.g., caching applications, traditional routing systems, and others) when these applications and/or devices 530 are responsible for moving the content/data 540 through the CDN.

Alternative paths 505 can be generated by any enrichment application that predetermines enriched paths based on configurable assumptions that parent nodes and/or existing filling links within the original tree data structure are potentially unavailable. Furthermore, these alternative paths can optionally be organized from least cost (e.g., shortest path) to highest cost (e.g., longest path). The alternative paths 505 are provided to the augmented tree data structure 500 before the content/data 540 is injected into the CDN. A level of granularity can also be configured and supplied to the enrichment application, such that the number and type of alternative paths 505 can be determined. A type of alternative path 505 can be a failed existing filling link for a subject node or a failed parent node for the subject node.

Thus, with the augmented tree data structure 500 content/data 540 is more efficiently rerouted through the CDN when failures in links and/or nodes are detected. Moreover, the level of granularity associated with alternative path generation can be configured and supplied by one most familiar with the CDN, such as a content administrator. Additionally, when a reroute is required for the content/data 540 within the CDN, the alternative paths 505 used to resolve any reroute are closely aligned and leverage the original tree data structure. One of ordinary skill in the art now understands upon reading and comprehending the present disclosure, how a tree for a CDN can be enriched to provide more efficient and timely service.

Although various embodiments of the present invention was discussed in terms of a CDN, it is readily apparent to one of ordinary skill in the art that this term can include any network configuration used to achieve the teachings of the present invention. Moreover, the enriched trees of various embodiments of the present invention are directed graphs and can contain cycles. Furthermore, it is readily apparent to one of ordinary skill in the art, that when the enriched trees are in use any standard or custom developed mechanism can be used to detect and avoid routing loops or break cyclic routing. These mechanisms can be associated with the enriched trees and/or separate and distinct from the enriched trees.

Additionally, although various embodiments depict data being injected or pushed into a CDN, it is readily apparent that this need not be the case. In fact, in some embodiments the data can be pulled into and through the CDN. Therefore, push or pull techniques can be used with the present disclosure.

The foregoing description of various embodiments of the invention has been presented for purposes of illustration and description. It is not intended to be exhaustive nor to limit the invention to the precise form disclosed. Many alternatives, modifications, and variations will be apparent to those skilled in the art in light of the above teaching. For example, although various embodiments of the invention have been described as a series of sequential steps, the invention is not limited to performing any particular steps in any particular order. Accordingly, this invention is intended to embrace all alternatives, modifications, equivalents, and variations that fall within the scope of the attached claims.

## Claims

1. A method to enrich a tree (410) for a content distribution network (411), comprising:
receiving the tree (303) for the content distribution network;
**characterized in that** the method further comprises:
receiving a request to generate alternative paths for the tree; and
generating the alternative paths based on the request, wherein the alternative paths are generated before data is transferred through the content distribution network, wherein in receiving the tree, the tree is a hierarchical abstraction of the content distribution network, and the tree includes a number of planned paths from an ingress node to one or more egress nodes and where the method comprises the further step of receiving a customization level (305) associated with the request, wherein the customization level indicates the number of nodes for which alternative paths are to be generated in the tree.

2. The method of claim 1 further comprising, transferring the data (330) using the tree over the content distribution network after the alternative paths (312) are generated.

3. The method of claim 1 further comprising, using at least one of the alternative paths, as the data is being transferred, when a content distribution network node and/or link are determined to be unavailable.

4. The method of claim 1 wherein in generating the alternative paths, each alternative path includes one or more costs associated with using each path to transfer the data, and wherein the costs are configurable based on policies associated with the content distribution network.

5. The method of claim 1 wherein in generating the alternative paths, each alternative path is ordered within a data structure that is associated with the tree.

6. The method of claim 1 comprising the further step of detecting a failure in a link and/or a node for a planned path within the tree during a transfer of the data over the content distribution network and automatically using one of the alternative paths to supplement the planned path in order to continue transferring the data.

7. The method of claim 1 wherein in requesting the tree, the tree is requested using a Steiner spanning tree generation algorithm.

8. The method of claim 1 further comprising, presenting the tree within a Graphical User Interface (GUI) application where nodes, links, and planned paths are discernible along with costs associated with the nodes, links, and paths.

9. The method of claim 1 wherein in receiving the desired level, the desired level is configurable to generate the alternative paths based on potential link failures and/or potential node failures included within the tree.

10. The method of claim 1 further comprising using customized policies to request the tree and to generate the alternative paths, where the customized policies are used to determine costs in transferring the data via the alternative paths.

11. The method of claim 1 further comprising, using an accelerated cache to transfer the data from an ingress node within the tree to one or more egress nodes within the tree, wherein a number of the alternative paths are used when links and/or nodes fail during the transfer of the data through the content distribution network.

12. A system to enrich a tree for a content distribution network, comprising:
a tree generated by a spanning tree algorithm for a content distribution network, wherein the tree includes a plurality of nodes, a link between a number of the nodes, and one or more planned paths for moving data through the content distribution network and wherein the system is adapted to perform the method of any one of claims 1-11.

## Patentansprüche

1. Verfahren, um einen Baum (410) für ein Inhaltsverteilungsnetz (411) anzureichern, umfassend:
Empfangen des Baums (303) für das Inhaltsverteilungsnetz; **gekennzeichnet dadurch, dass** das Verfahren ferner umfasst:
Empfangen einer Anfrage, alternative Pfade für den Baum zu generieren; und
Generieren der alternativen Pfade, wobei die alternativen Pfade generiert werden, bevor Daten durch das Inhaltsverteilungsnetz transferiert werden, wobei bei Empfang des Baums der Baum eine hierarchische Abstraktion des Inhaltsverteilungsnetzes ist, und der Baum eine Zahl von geplanten Pfaden von einem Eingangsknoten zu einem oder mehr Eingangsknoten inkludiert und wobei das Verfahren den weiteren Schritt zum Empfangen eines Anpassungsgrades (305), der mit der Anfrage in Verbindung steht, umfasst, wobei der Anpassungsgrad die Zahl von Knoten anzeigt, für die alternative Pfade in dem Baum zu generieren sind.

2. Verfahren nach Anspruch 1, ferner umfassend Transferieren der Daten (330) unter Verwendung des Baums über das Inhaltsverteilungsnetz, nachdem die alternativen Pfade (312) generiert sind.

3. Verfahren nach Anspruch 1, ferner umfassend Verwenden mindestens eines der alternativen Pfade, während die Daten transferiert werden, wenn ein Inhaltsverteilungsnetzknoten und/oder Verknüpfung bestimmt sind, nicht verfügbar zu sein.

4. Verfahren nach Anspruch 1, wobei beim Generieren der alternativen Pfade jeder alternative Pfad eine oder mehr Kosten inkludiert, die mit Verwendung jeden Pfades in Verbindung stehen, um die Daten zu transferieren, und wobei die Kosten basierend auf Richtlinien konfigurierbar sind, die mit dem Inhaltsverteilungsnetz in Verbindung stehen.

5. Verfahren nach Anspruch 1, wobei beim Generieren der alternativen Pfade jeder alternative Pfad innerhalb einer Datenstruktur geordnet ist, die mit dem Baum in Verbindung steht.

6. Verfahren nach Anspruch 1, ferner umfassend den Schritt zum Erfassen eines Fehlers in einer Verknüpfung und/oder einem Knoten für einen geplanten Pfad innerhalb des Baums während eines Transfers der Daten über das Inhaltsverteilungsnetz und automatischen Verwenden eines der alternativen Pfade, um den geplanten Pfad zu ergänzen, um einen Transfer der Daten fortzusetzen.

7. Verfahren nach Anspruch 1, wobei beim Anfordern des Baums der Baum unter Verwendung eines Umspannungsbaumgenerierungsalgorithmus nach Steiner angefordert wird.

8. Verfahren nach Anspruch 1, ferner umfassend Präsentieren des Baums innerhalb einer grafischen Benutzerschnittstellen- (GUI) Anwendung, wobei Knoten, Verknüpfungen und geplante Pfade zusammen mit Kosten, die mit den Knoten, Verknüpfungen und Pfaden in Verbindung stehen, erkennbar sind.

9. Verfahren nach Anspruch 1, wobei beim Empfangen des gewünschten Grades der gewünschte Grad konfigurierbar ist, um die alternativen Pfade basierend auf potenziellen Verknüpfungsfehlern und/oder potenziellen Knotenfehlern, die innerhalb des Baums inkludiert sind, zu generieren.

10. Verfahren nach Anspruch 1, ferner umfassend Verwenden angepasster Richtlinien, um den Baum anzufordern und die alternativen Pfade zu generieren, wobei die angepassten Richtlinien verwendet werden, um Kosten beim Transfer der Daten über die alternativen Pfade zu bestimmen.

11. Verfahren nach Anspruch 1, ferner umfassend Verwenden eines beschleunigten Caches, um die Daten von einem Eingangsknoten innerhalb des Baums zu einem oder mehr Eingangsknoten innerhalb des Baums zu transferieren, wobei eine Zahl der alternativen Pfade verwendet werden, wenn Verknüpfungen und/oder Knoten während des Transfers der Daten durch das Inhaltsverteilungsnetz fehlschlagen.

12. System zum Anreichern eines Baums für ein Inhaltsverteilungsnetz, umfassend:
einen Baum, der durch einen Umspannungsbaumalgorithmus für ein Inhaltsverteilungsnetz generiert wird, wobei der Baum eine Vielzahl von Knoten, eine Verknüpfung zwischen einer Zahl der Knoten und einen oder mehr geplante Pfade zum Bewegen von Daten durch das Inhaltsverteilungsnetz inkludiert, und wobei das System angepasst ist, das Verfahren nach einem beliebigen von Ansprüchen 1-11 durchzuführen.

## Revendications

1. Procédé pour enrichir une arborescence (410) pour un réseau de distribution de contenus (411), comportant :
la réception de l'arborescence (303) pour le réseau de distribution de contenus ;
**caractérisé en ce que** le procédé comporte en outre :
la réception d'une demande pour générer d'autres chemins pour l'arborescence ; et
la génération des autres chemins sur la base de la demande, dans lequel les autres chemins sont générés avant que des données soient transférées à travers le réseau de distribution de contenus, dans lequel dans la réception de l'arborescence, l'arborescence est une abstraction hiérarchique du réseau de distribution de contenus, et l'arborescence inclut un certain nombre de chemins planifiés d'un noeud d'entrée à un ou plusieurs noeuds de sortie et où le procédé comporte l'étape supplémentaire de réception d'un niveau de personnalisation (305) associé à la demande, dans lequel le niveau de personnalisation indique le nombre de noeuds pour lesquels d'autres chemins doivent être générés dans l'arborescence.

2. Procédé selon la revendication 1, comportant en outre le transfert des données (330) en utilisant l'arborescence sur le réseau de distribution de contenus après la génération des autres chemins (312).

3. Procédé selon la revendication 1, comportant en outre l'utilisation d'au moins l'un des autres chemins, lorsque les données sont transférées, quand un noeud et/ou une liaison de réseau de distribution de contenus sont déterminés comme étant indisponibles.

4. Procédé selon la revendication 1, dans lequel, dans la génération des autres chemins, chaque autre chemin inclut un ou plusieurs coûts associés à l'utilisation de chaque chemin pour transférer les données, et dans lequel les coûts sont configurables sur la base de règles associées au réseau de distribution de contenus.

5. Procédé selon la revendication 1, dans lequel, dans la génération des autres chemins, chaque autre chemin est ordonné dans une structure de données qui est associée à l'arborescence.

6. Procédé selon la revendication 1, comportant l'étape supplémentaire de détection d'une défaillance dans une liaison et/ou un noeud d'un chemin planifié dans l'arborescence durant un transfert des données sur le réseau de distribution de contenus et d'utilisation automatique de l'un des autres chemins pour compléter le chemin planifié afin de poursuivre le transfert des données.

7. Procédé selon la revendication 1, dans lequel, dans la demande de l'arborescence, l'arborescence est demandée en utilisant un algorithme de génération d'arbre recouvrant de Steiner.

8. Procédé selon la revendication 1, comportant l'étape supplémentaire de présentation de l'arborescence dans une application d'Interface Graphique Utilisateur (GUI) où des noeuds, des liaisons, et des chemins planifiés sont discernables conjointement avec des coûts associés aux noeuds, liaisons, et chemins.

9. Procédé selon la revendication 1, dans lequel, dans la réception du niveau voulu, le niveau voulu est configurable pour générer les autres chemins sur la base de défaillances de liaison potentielles et/ou de défaillances de noeud potentielles incluses dans l'arborescence.

10. Procédé selon la revendication 1, comportant en outre l'utilisation de règles personnalisées pour sonder l'arborescence et pour générer les autres chemins, où les règles personnalisées sont utilisées pour déterminer des coûts de transfert des données via les autres chemins.

11. Procédé selon la revendication 1, comportant en outre l'utilisation d'un cache accéléré pour transférer les données d'un noeud d'entrée dans l'arborescence à un ou plusieurs noeuds de sortie dans l'arborescence, dans lequel un certain nombre d'autres chemins sont utilisés lorsque des liaisons et/ou des noeuds sont défaillants pendant le transfert des données à travers le réseau de distribution de contenus.

12. Système pour enrichir une arborescence pour un réseau de distribution de contenus, comportant :
une arborescence générée par un algorithme d'arbre recouvrant pour un réseau de distribution de contenus, dans lequel l'arborescence inclut une pluralité de noeuds, une liaison entre un certain nombre des noeuds, et un ou plusieurs chemins planifiés pour déplacer des données à travers le réseau de distribution de contenus et dans lequel le système est adapté pour mettre en oeuvre le procédé selon l'une quelconque des revendications 1 à 11.
